## Europäisches Patentamt

## European Patent Office

## Office européen des brevets

(11) Publication number: **0 222 148**
**B1**

# EUROPEAN PATENT SPECIFICATION

(45) Date of publication of patent specification: **08.08.90**

(51) Int. Cl.⁵: **B 23 Q 7/16, B 21 B 39/20**

(21) Application number: **86113817.0**

(22) Date of filing: **06.10.86**

(54) Device for orienting shaped bars.

(30) Priority: **16.10.85 IT 357585**

(43) Date of publication of application:
**20.05.87 Bulletin 87/21**

(45) Publication of the grant of the patent:
**08.08.90 Bulletin 90/32**

(84) Designated Contracting States:
**DE ES FR GB**

(56) References cited:
**AT-B- 49 325**
**AT-B- 266 021**
**US-A-1 217 919**
**US-A-3 258 949**

**SOVIET INVENTIONS ILLUSTRATED, Section Ch, week C 24, July 23, 1980 DERWENT PUBLICATIONS LTD, London WC1X SU 695 732 (WAGON CONSRESINST)**

(73) Proprietor: **I.E.M.C.A. S.p.a. Industria Elettromeccanica Complessi Automatici Via Emilia Ponente, 6 I-48018 Faenza Province of Ravenna (IT)**

(72) Inventor: **Fabbri, Vladimiro Via Gallignani 9 I-48018 Faenza (Province of Ravenna) (IT)**

(74) Representative: **Modiano, Guido et al MODIANO, JOSIF, PISANTY & STAUB Modiano & Associati Via Meravigli, 16 I-20123 Milano (IT)**

Courier Press, Leamington Spa, England.

## Description

The subject matter of this invention is a device for orienting shaped bars.

As is known, in several mechanical processes metal bars are utilised as the starting material. The bars to be processed are caused to advance axially into a suitable guide so as to introduce their end into a matingly shaped seat or mandrel.

Where shaped bars are to be processed, for example with a square or polygonal profile, the problem arises of angularly orienting the bar itself with respect to the seat intended to receive it. To accomplish this devices are currently employed which are composed of a pair of rollers which are urged elastically into contact, on opposed sides, with the bar; thus a force couple is produced which can rotate the bar itself into the oriented position, defined by the rollers resting on two faces of the sectional member.

This solution proves however not to be entirely reliable.

When in fact the bar enters between the rollers with the shaped section oriented in a symmetrical manner with respect to the rollers themselves, the latter are unable to produce its rotation. In addition there often exists the need to carry out that orientation with the seat rotating with respect to the bar.

It is the aim of this invention to solve the cited problem, providing a device which ensures proper orientation of the bar to be processed.

Within that aim it is a further object of the invention to provide a device simple in conception, easy and versatile to use, and of relatively economical cost.

That aim and that and other objects which will become apparent hereinafter are achieved, according to the invention by a device for angularly positioning a polygonal bar about its longitudinal axis when travelling longitudinally along a path defined between the circumferential surfaces of two opposed rollers mounted for rotation about axes substantially perpendicular to said path and elastically urged respectively to engage the bar, characterised in that each roller presents on its circumferential surface a helical indentation which is adapted to engage, as the bar advances, a corner of the bar so as to rotate it about the longitudinal axis until reaching an angular position defined by two of its faces resting against said rollers.

The details of the invention will be more clearly apparent from the detailed description of a preferred embodiment of the device for orienting shaped bars, shown by way of illustration in the accompanying non-limitative drawings, where:

Figure 1 shows a plan view of the subject device;

Figures 2a, 2b, 2c and 2d illustrate, in respective front views, successive phases of bar orientation;

Figure 3 shows in plan the insertion of a bar into a seat being rotated relatively to it;

Figure 4 is a sectional view taken along the line IV-IV of Figure 3;

Figure 5 is a plan view of the device arranged for orienting rotating bars; and

Figure 6 shows a front view of the device of Figure 5.

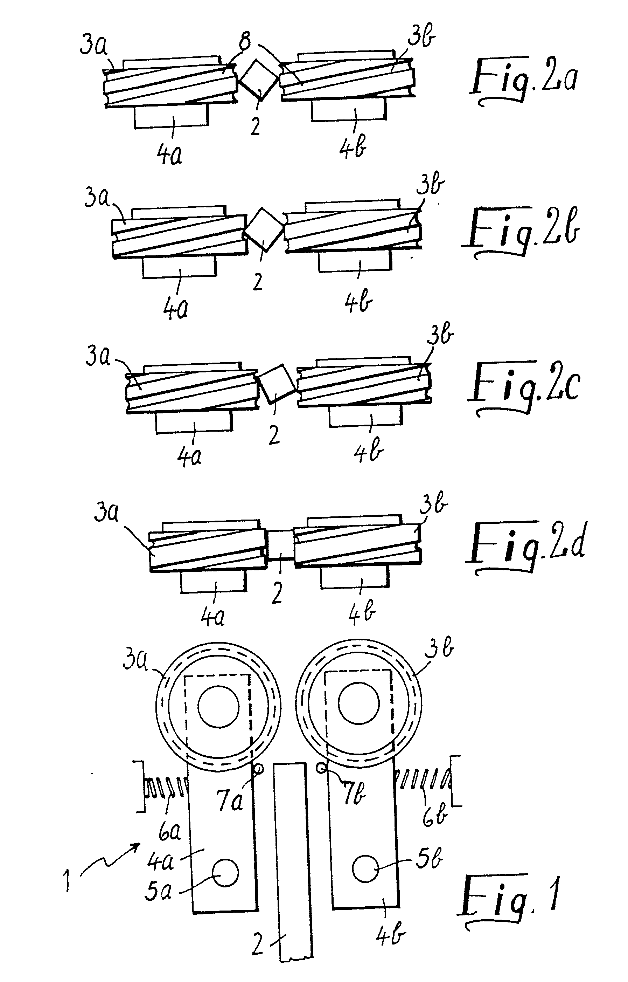

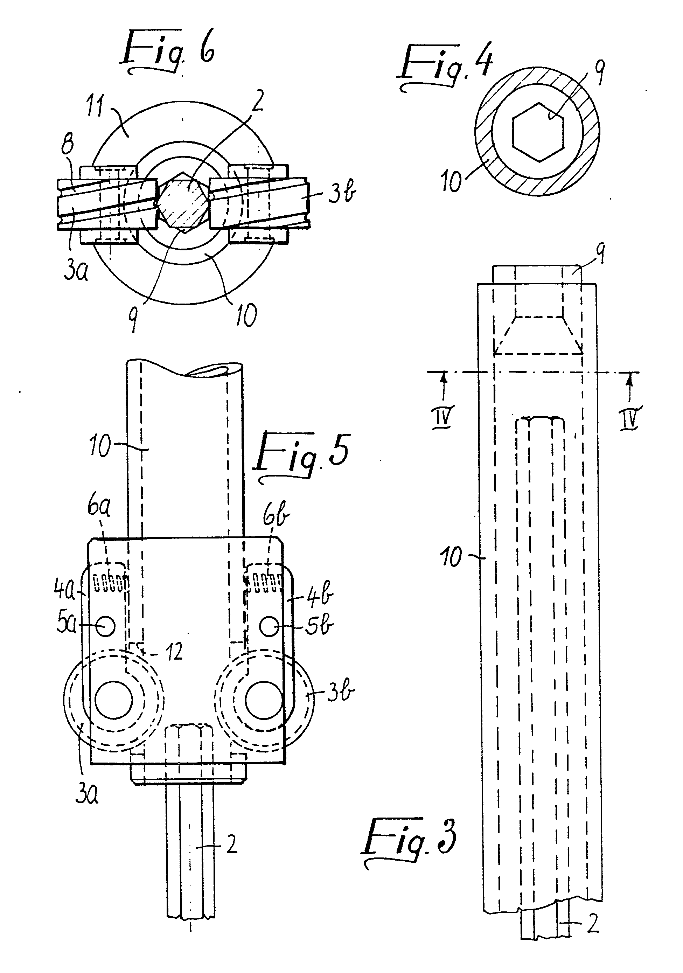

With reference first to Figures 1 and 2a, 2b, 2c, 2d, generally indicated at 1 is the device for orienting a shaped bar 2.

The device 1 consists substantially of a pair of rollers 3a, 3b arranged side-by-side with perpendicular axes to the axial direction of advance of the bar 2.

The rollers 3a, 3b are carried rotatably on related cross arms 4a, 4b, which are oscillating on the pins 5a, 5b.

The rollers 3a, 3b are urged toward each other by springs 6a, 6b acting on the related arms 4a, 4b. Respective locators 7a, 7b define the maximum position of approach of the rollers.

The rollers 3a, 3b respectively have formed on the outer surface, an indentation 8 which extends spirally. Thus, as the bar 2 is advanced axially, it introduces itself between the rollers 3a, 3b engaging their outer surfaces with related corners (Fig. 2a) and causing it to become wider against the springs 6a, 6b which ensure an adequate pressure of the rollers onto the bar.

The advancement of the bar 2 causes rotation of the rollers 3a, 3b, thereby, the related indentation 8 rotating helically, a corner of the sectional member ends by engaging one of such indentations (Fig. 2b). The indentation 8 on gripping the corner, ensures entrainment of the bar which turns axially (Fig. 2c) until it moves with two juxtaposed faces to bear on the outer surfaces of the rollers (Fig. 2d), which represents the target oriented position.

Should the bar 2, as depicted in Figures 3 and 4, require introduction into a conforming seat 9 of a rotating tube 10, it is suitably envisaged that the device takes the conformation shown in Figures 5 and 6.

In that conformation, the rollers 3a, 3b, having formed thereon the shaped indentation 8, are mounted oscillably through related arms 4a, 4b on a support 11 which is rigidly externally associated with the tube 10 on the opposed side from the seat 9. The rollers 3a, 3b are thus rigidly rotatable with the tube 10.

The rollers face the interior of the tube by means of related openings 12 of the latter, thereby they are adapted to engage the bar 2 at the time of its entering the tube 2 (Fig. 5).

Also in this case, the bar advancement causes axial rotation of rollers and consequently a corner of the sectional member enters an indentation 8. As the advancing movement is continued, the bar turns on itself being entrained by the rollers, which continue to rotate, up to the oriented position defined by resting on the lateral surfaces of the rollers. Of course, such surfaces should correspond respectively to two opposed sides of the seat 9 (Fig. 6).

In practically implementing the invention within the scope of the claims any materials, shapes and dimensions may be used according to contingent requirements.

### Claims

1. A device for angularly positioning a polygonal bar (2) about its longitudinal axis when travelling longitudinally along a path defined between the circumferential surfaces of two opposed rollers (3a, 3b) mounted for rotation about axes substantially perpendicular to said path and elastically urged respectively to engage the bar, characterised in that each roller presents on its circumferential surface a helical indentation (8) which is adapted to engage, as the bar advances, a corner of the bar so as to rotate it about the longitudinal axis until reaching an angular position defined by two of its faces resting against said rollers.

2. A device according to claim 1, characterised in that said rollers (3a, 3b) are carried rotatably on respective oscillable arms (4a, 4b) which are urged toward each other by related spring means (6a, 6b).

3. A device according to claim 2, characterised in that said arms (4a, 4b) are mounted oscillably on a support (11) rigid with a rotating tube (10), having a seat (9) for introducing said bar.

### Patentansprüche

1. Vorrichtung zum winkligen Positionieren einer polygonalen Stange (2) um ihre Längsachse, wenn sie in Längsrichtung entlang einer Bahn bewegt wird, die zwischen den Umfangsflächen zweier gegenüberliegender Rollen (3a, 3b) gebildet ist, die für eine Drehbewegung um im wesentlichen senkrecht zu dieser Bahn vorgesehene Achsen angeordnet und in entsprechender Weise elastisch vorgespannt sind, um die Stange zu ergreifen, dadurch gekennzeichnet, daß jede Rolle auf ihrer Umfangsfläche eine Einkerbung (8) aufweist, die so angepaßt ist, daß sie, wenn die Stange vorwärts bewegt wird, mit einer Kante dieser Stange in Eingriff kommt, um sie um ihre Längsachse zu drehen bis sie eine Winkelstellung erreicht, die dadurch definiert ist, daß zwei ihrer Seiten an den genannten Rollen anliegen.

2. Vorrichtung nach Anspruch 1, dadurch gekennzeichnet, daß die Rollen (3a, 3b) drehbar an entsprechenden, hin- und herschwenkbaren Armen (4a, 4b) getragen werden, die durch zugeordnete Federeinrichtungen (6a, 6b) gegeneinander gedrängt werden.

3. Vorrichtung nach Anspruch 2, dadurch gekennzeichnet, daß die genannten Arme (4a, 4b) hin- und herschwenkbar auf einer Halterung (11) angeordnet sind, die starr mit einem rotierenden Rohr (10) verbunden ist, das einen Sitz (9) zum Einführen dieser Stange aufweist.

### Revendications

1. Dispositif pour positionner angulairement une barre polygonale (2) autour de son axe longitudinal lorsqu'elle se déplace longitudinalement sur un trajet défini entre les surfaces circonférentielles de deux galets opposés (3a, 3b) montés pour tourner autour d'axes sensiblement perpendiculaires audit trajet et rappelés élastiquement pour respectivement venir en contact de ladite barre, caractérisé par le fait que chaque galet présente sur sa surface circonférentielle une gorge hélicoïdale (8) qui est conçue pour réaliser un contact, à mesure que la barre avance, avec un coin de la barre de manière à la tourner autour de son axe longitudinal jusqu'à ce qu'elle atteigne une position angulaire définie par le fait que deux de ses faces sont en appui contre lesdits galets.

2. Dispositif selon la revendication 1, caractérisé par le fait que lesdits galets (3a, 3b) sont portés à rotation sur des bras oscillants respectifs (4a, 4b) qui sont rappelés l'un vers l'autre par des moyens à ressort associés (6a, 6b).

3. Dispositif selon la revendication 2, caractérisé par le fait que lesdits bras (4a, 4b) sont montés oscillants sur un support (11) solidaire d'un tube tournant (10) possédant un logement (9) pour introduire ladite barre.

3a 8 3b

*Fig.2a*

4a 2 4b

3a 3b

*Fig.2b*

4a 2 4b

3a 3b

*Fig.2c*

4a 2 4b

3a 3b

*Fig.2d*

4a 2 4b

3a 3b

6a 7a 7b 6b

1 4a

5a 2 4b

*Fig.1*

Fig. 6

Fig. 4

Fig. 5

Fig. 3